(19) Europäisches Patentamt
European Patent Office
Office européen des brevets

(11) **EP 2 046 239 B1**

(12) **EUROPÄISCHE PATENTSCHRIFT**

(45) Veröffentlichungstag und Bekanntmachung des Hinweises auf die Patenterteilung:
**12.01.2011 Patentblatt 2011/02**

(21) Anmeldenummer: **07786488.2**

(22) Anmeldetag: **01.08.2007**

(51) Int Cl.:
***A61C 13/20*** *(2006.01)*

(86) Internationale Anmeldenummer:
**PCT/EP2007/006800**

(87) Internationale Veröffentlichungsnummer:
**WO 2008/014989 (07.02.2008 Gazette 2008/06)**

(54) **VERFAHREN ZUM AUFHEIZEN EINER FÜR DENTALKERAMIK VERWENDETEN, VORGEWÄRMTEN PRESSMUFFEL IN EINEM PRESSOFEN SOWIE STEUERVORRICHTUNG UND DIESE ENTHALTENDER OFEN**

METHOD FOR HEATING A PRE-WARMED MUFFLE USED FOR DENTAL CERAMICS IN A DENTAL FURNACE AND CONTROL DEVICE AND FURNACE CONTAINING SAID DEVICE

PROCÉDÉ POUR CHAUFFER UN MOUFLE DE PRESSAGE PRÉCHAUFFÉ UTILISÉ POUR DE LA CÉRAMIQUE DENTAIRE DANS UN FOUR DE PRESSAGE AINSI QUE DISPOSITIF DE COMMANDE ET FOUR LE CONTENANT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.08.2006 DE 102006036132**

(43) Veröffentlichungstag der Anmeldung:
**15.04.2009 Patentblatt 2009/16**

(73) Patentinhaber: **Zubler Gerätebau GmbH**
**89081 Ulm-Jungingen (DE)**

(72) Erfinder: **ZUBLER, Kurt**
**89233 Neu-Ulm (DE)**

(74) Vertreter: **Fiener, Josef et al**
**Patentanw. J. Fiener et col.**
**P.O. Box 12 49**
**87712 Mindelheim (DE)**

(56) Entgegenhaltungen:
WO-A-2005/116557    DE-A1- 3 732 041
DE-A1- 3 831 539    DE-B1- 1 926 875
US-B1- 6 303 059

EP 2 046 239 B1

**Beschreibung**

Die Erfindung betrifft ein Verfahren zum Aufheizen einer für Dentalkeramik verwendeten, vorgewärmten Pressmuffel in einem Pressofen sowie eine Steuervorrichtung und einen Ofen, der eine solche Steuervorrichtung enthält.

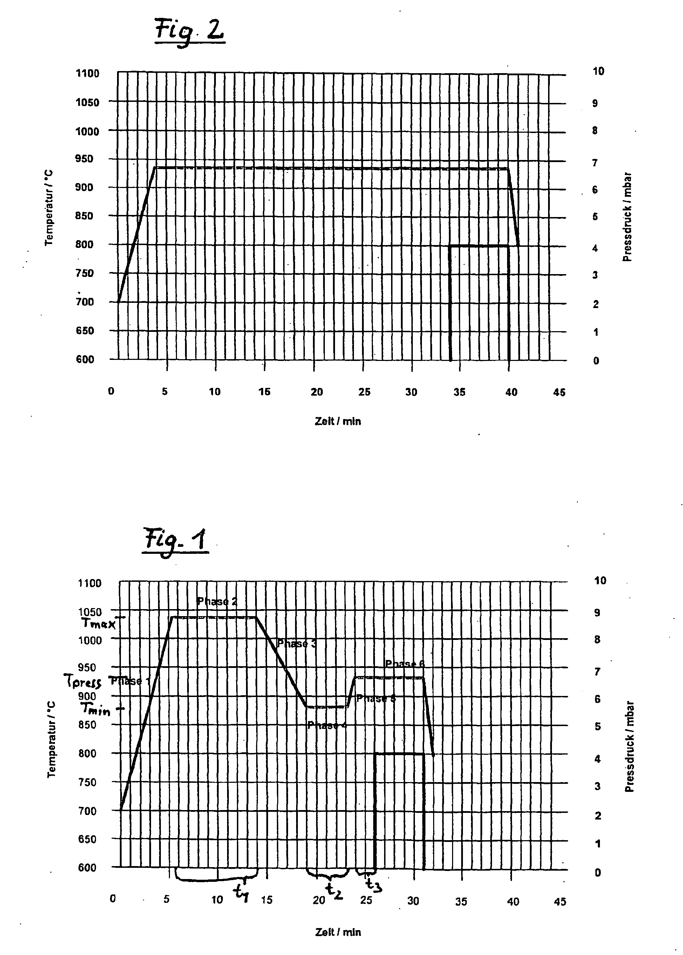

Bisher wurde davon ausgegangen, dass durch Eingabe einer Solltemperatur, einer Heizrate und einer relativ langen Haltezeit auf der Solltemperatur das Verfahren zum Aufheizen einer für Dentalkeramik verwendeten Pressmuffel vor dem Pressvorgang als Teils eines Pressprogramms ausreichend definiert wird. Dabei wird die eingegebene Temperatur konstant gehalten und stimmt je nach Ofentyp mehr oder weniger genau mit der Ist-Temperatur in der Pressmuffel (nachstehend auch kurz Muffel genannt) überein. Dieses Verfahren ist in Fig. 2 schematisch dargestellt. In den Verarbeitungsvorschriften der Keramikhersteller wird vor Überhitzungen gewarnt und auf die Einhaltung der vorgeschriebenen Temperaturen bei der Verarbeitung hingewiesen. Konsequenz daraus ist das eingangs genannte, seit vielen Jahren übliche und steuerungstechnisch mit den auf dem Markt befindlichen Pressöfen nicht anders mögliche Verfahren, die Solltemperatur als Maximaltemperatur einzustellen und die gesamte Muffel langsam von unten auf diese Temperatur aufzuheizen. Da Einbettmassen, aus denen die Muffel gebildet ist, eine sehr geringe Wärmeleitfähigkeit aufweisen, ist eine lange Heizzeit erforderlich. Trotzdem liegt die tatsächliche Temperatur im Inneren der Muffel bei Beginn des Pressvorgangs noch immer bis zu 30 °C unterhalb der eingestellten Solltemperatur. Die Angaben für die Verarbeitungstemperatur der Keramik ist meist auf diese Problematik abgestimmt und hat einen höheren Wert, als dies tatsächlich erforderlich ist. Tests und Messungen innerhalb der Muffel haben dies ergeben.

Nach Fehlpressungen, die nicht ausgeflossen sind, wird oft versucht, die Haltezeit zu verlängern oder die Solltemperatur nach oben zu korrigieren. Beide Maßnahmen ändern jedoch nichts daran, dass ein Temperaturgefälle innerhalb der Muffel von außen nach innen (z.B. bis zu 60 °C bei der Muffel mit 300 g) besteht. Fehlpressungen durch Überhitzungen oder frühzeitige Erstarrung der Keramik auf dem Weg in die Modellform sind an der Tagesordnung. Gute Durchwärmung kann noch bei Muffeln mit 100 g Einbettmasse (Durchmesser 38 mm) erzielt werden. Für komplexere Arbeiten wie Mehrfachmodelle ist die Verwendung von Muffelformem für 200 g Einbettmasse (Durchmesser 48 mm) üblich.

Größere Arbeiten (z.B. mehrgliedrige Brücken) waren bisher von der Technik des Keramikpressens ausgeschlossen. Dies liegt zum einen an der fehlenden Indikation existierender keramischer Werkstoffe (große Brückenkonstruktionen erfordem eine hohe Bruchfestigkeit), zum anderen an der Schwierigkeit, die dafür erforderlichen Muffeln mit 300 g (Durchmesser 62 mm) nach der bekannten Technik ausreichend homogen zu durchwärmen.

Eine neue, in der Anwendung immer häufiger anzutreffende Technik (Press-to-Metal) eliminiert das Problem mangelnder Biegefestigkeit einer Dentalkeramik. In diesem Verfahren dient der Presskeramik ein Gerüst aus einer dentalen Metalllegierung als Unterbau. Während diese Technik seit mehr als 50 Jahren in der Zahntechnik etabliert ist, hierbei jedoch die Keramik durch Schichten aufgebracht wurde, kann mit dem Press-to-Metal-Verfahren auf wesentlich effektivere Weise hochwertiger Zahnersatz erstellt werden. Dieses Verfahren macht in Zukunft das gleichmäßige Durchwärmen, insbesondere größerer Pressmuffeln erforderlich.

Von vielen Zahntechnikern werden Keramikarbeiten höherer Komplexität als "nicht machbar" eingestuft. Kaum eine Arbeit gelingt ohne Spuren von Materialschädigungen oder Verfärbungen. Zusätzlich stehen die erforderlichen langen Programmlaufaeiten durch die Aufwärmphase dem hohen Kosten- und Zeitdruck entgegen. Auch bei kleinen Muffeln ist die Temperatur oft nicht exakt und gleichmäßig genug, so dass insbesondere bei hellen Zahnfarben Effekte wie das Vergrauen auftreten. Qualitätsmängel führen auch hier oft zu Wiederholungsarbeiten oder aufwendiger Nacharbeit.

Die US 6,303,059 B1 beschreibt ein Verfahren zum Steuern eines Pressofens für die Herstellung von Dentalkeramik. Hierbei wird eine Pressmuffel beispielsweise auf eine Temperatur von 920° C aufgeheizt und für 20 Minuten konstant gehalten. Weitere Angaben zum Abkühlen der Pressmuffel oder Halten der Pressmuffel auf einer solchen Abkühltemperatur erfolgen nicht, da sich die Druckschrift vorwiegend mit der Steuerung des Pressdrucks befasst. Zudem wird der Druckschrift eine entsprechende Steuervorrichtung für den Pressofen beschrieben, wobei Eingabeelemente zum Festlegen von Ofenparametern, wie Temperatur, Haltezeiten, Heizraten usw. vorgesehen sind.

Der vorliegenden Erfindung liegt die Aufgabe zugrunde, ein vereinfachtes Verfahren zur Herstellung von Presskeramik in der Zahntechnik zu schaffen, das die oben geschilderten Nachteile vermeidet und die Einsparung von Zeit beim Aufwärmen vor dem Pressen ermöglicht und gleichzeitig eine gleichmäßige Durchwärmung der Muffeln sicherstellt, wodurch eine optimale Fließfähigkeit der Keramik und somit weniger Fehlpressungen erreicht sowie Vermeidung von Materialschädigungen durch Überhitzen vermieden werden können. Weiterhin soll eine geeignete Ofensteuerung bzw. Programmeingabemöglichkelt an einem Pressofen sowie ein entsprechend ausgerüsteter Ofen zur Durchführung dieses Verfahrens geschaffen werden.

Diese Aufgabe wird mit einem Verfahren zum Aufheizen einer für Dentalkeramik verwendeten Pressmuffel vor dem Pressvorgang in einem Ofen gemäß Anspruch 1 sowie mit einer entsprechenden Steuervorrichtung gemäß Anspruch 9 zur Durchführung dieses Verfahrens und einem eine solche Steuervorrichtung umfassenden Ofen gemäß Anspruch 11 gelöst. Vorteilhafte Weiterbildungen der Erfindung sind Gegenstand der abhängigen Ansprüche.

Der Erfindung liegt die Tatsache zugrunde, dass bei Erwärmung der Umgebung eines kälteren Objektes dieses Objekt nicht unverzüglich die Umgebungstemperatur annimmt. Wärmekapazität und Wärmeleitfähigkeit kennzeichnen das träge Verhalten von Körpern bei der Erwärmung. Bei guter Isolation bzw. vollflächiger Wärmeeinwirkung ist nach einer gewissen Zeit der Körper gleichmäßig durchwärmt. Insgesamt dauert es sehr lange, wenn die Umgebungstemperatur bzw. die Heiztemperatur und die angestrebte Endtemperatur des Körpers gleich gewählt werden, insbesondere dann, wenn es sich um ein Material mit niedriger Wärmeleitzahl handelt. Der Temperaturausgleich verlangsamt sich, je geringer der Temperaturunterschied zwischen. Endtemperatur und Umgebungstemperatur ist. Der erfindungsgemäße Ansatz besteht daher darin, durch eine zeitlich begrenzte Überhöhung der vorgegebenen Temperatur eine bestimmte Wärmemenge in kürzerer Zeit von außen in das Innere der Muffel zu transportieren. Die Temperatur soll jedoch bis ins Zentrum gelangen, wo sich die unverpressten Keramikrohlinge (Pellets) befinden. Das neue Verfahren stützt sich dabei auf die bekannte Anordnung beim Pressen von Keramik, bei der erst beim Pressvorgang am Ende der Aufwärmphase das Keramikmaterial durch die Modellform in die Außenbereiche der Muffel gelangt. Entscheidend hierbei ist, dass der Temperaturverlauf und die Höhe der Temperatur in den äußeren Bereichen der Muffel, in denen sich zunächst noch kein Keramikmaterial befindet, abweichend von der Presstemperatur, höher sein kann, solange der Pressvorgang noch nicht begonnen hat. Der Pressvorgang wird erst nach einer Abkühlphase und einem erfolgten Temperaturausgleich in der Muffel eingeleitet. Bei Vollkeramikobjekten besteht die Möglichkeit, stark zu überhitzen und somit die Zeit des Pressvorgangs erheblich zu reduzieren.

Erfindungsgemäß ist somit vorgesehen, die Pressmuffel auf eine Maximaltemperatur aufzuheizen, die deutlich oberhalb der Presstemperatur liegt, also derjenigen Temperatur, bei welcher der Pressvorgang ausgeführt wird. Dies dient dazu, dass in der Anfangsphase des Aufheizvorgangs möglichst viel Wärme in die Pressmuffel eingebracht wird, und da das Einbringen der Wärme in das Innere der Pressmuffel aufgrund der geringen Wärmeleitfähigkeit des Materials, aus der die Pressmuffel besteht, nur relativ langsam erfolgt, ist keine Überhitzung der in die Pressmuffel eingebrachten Keramikrohlinge zu befürchten. Nach Erreichen der Maximaltemperatur wird die Heizung des Ofens abgeschaltet, wodurch die Außenseite der Pressmuffel zwar abkühlt, aber dennoch der Wärmetransport in das noch kühlere Innere der Pressmuffel fortgesetzt wird. Diese Phase dient also dazu, eine möglichst gleichmäßige Temperaturverteilung innerhalb der Pressmuffel zu erzielen. Das Abkühlen der Pressmuffel erfolgt dabei bis auf eine Minimaltemperatur, die im einfachsten Fall gleich der Presstemperatur ist, jedoch auch darunter liegen kann. Die Pressmuffel wird dann anschließend eine Weile auf der Minimaltemperatur gehalten, um die Gleichmäßigkeit der Temperaturverteilung zu verbessern. Dieses Aufheizverfahren ist für Pressmuffeln mit einer Masse von 100 g gut einsetzbar. Bei einer Masse der Pressmuffel von 200 g oder darüber ist es jedoch geboten, die Pressmuffel nach Erreichen der Maximaltemperatur noch während einer ersten Haltezeit bei dieser Temperatur zu halten, um die erforderliche Wärmemenge in die Pressmuffel zu transportieren, bevor diese abkühlen darf. Erfindungsgemäß kann die Pressmuffel daher mit einer Maximaltemperatur beheizt werden, die deutlich über der vorgeschriebenen Verarbeitungstemperatur der Keramik, vorzugsweise zwischen 50 °C und bis zu mehr als 200 °C über der Presstemperatur, liegt.

Die Anpassung der Maximaltemperatur an die verwendete Masse der Pressmuffel erfolgt vorzugsweise dadurch, dass zur Presstemperatur für die verwendete Dentalkeramik eine Temperaturdifferenz $T_{m1}$ hinzuaddiert wird, die für die gängigen Muffelmassen wie folgt näherungsweise ermittelt wurden und die bei Bedarf entsprechend interpoliert bzw. extrapoliert werden können:

$$T_{m1}(100\text{ g}) = 160\text{ °C}$$
$$T_{m1}(200\text{ g}) = 180\text{ °C}$$
$$T_{m1}(300\text{ g}) = 200\text{ °C}.$$

Falls die für eine optimal kurze Aufheizzeit gegebene Maximaltemperatur durch den Ofen nicht erreicht werden kann, ist es bevorzugt, die erste Haltezeit so zu bestimmen, dass die Differenz zwischen der Maximaltemperatur und der Ofengrenztemperatur mit einem experimentell ermittelten Faktor k multipliziert wird, der die verschiedenen Muffelgrößen berücksichtigt. Als Anhaltspunkt für die gängigsten drei Muffelgrößen gelten in etwa folgende Werte, die bei abweichenden Muffelgrößen bedarfsweise extrapoliert oder interpoliert werden können:

$$k_{100g} = 0,05\text{ min/°C}$$
$$k_{200g} = 0,075\text{ min/°C}$$
$$k_{300g} = 0,1\text{ min/°C}.$$

Für den Fall, dass die Maximaltemperatur aufgrund einer Objektgrenztemperatur begrenzt ist, die durch in der Pressmuffel eingebettete Objekte wie beispielsweise die Keramik oder ein Opaker gegeben ist, wird die Ofengrenztemperatur vorzugsweise dadurch bestimmt, dass zur Objektgrenztemperatur eine von der Masse der Pressmuffel abhängige Temperaturdifferenz $T_{m2}$ hinzuaddiert wird, die empirisch für die gängigsten Muffelmassen näherungsweise wie folgt ermittelt wurden und die für dazwischenliegende Muffelmassen entsprechend interpoliert werden:

$T_{m2}(100\ g) = 0\ °C$
$T_{m2}(200\ g) = 50\ °C$
$T_{m2}(300\ g) = 50\ °C.$

Um die Temperaturverteilung innerhalb der Muffel noch gleichmäßiger gestalten zu können, ist es vorteilhaft, die aufgeheizte Pressmuffel auf eine Temperatur von vorzugsweise 20 °C - 50 °C unterhalb der Presstemperatur abkühlen zu lassen, während einer Haltezeit von ungefähr 0,5 - 4 Minuten und vorzugsweise etwa 1 - 3 Minuten auf dieser Minimaltemperatur zu halten und anschließend wieder auf die Presstemperatur hoch zu heizen, wobei die Pressmuffel dann etwa 1 - 3 Minuten, vorzugsweise 1 - 2 Minuten, auf dieser Presstemperatur gehalten wird, bevor der eigentliche Pressvorgang beginnt. Selbstverständlich wird die Pressmuffel auch während des Pressvorgangs auf der Presstemperatur gehalten.

Erfindungsgemäß ist es vorgesehen, eine Steuervorrichtung für einen Ofen zum Aufheizen einer für Dentalkeramik verwendeten Pressmuffel vor dem eigentlichen Pressvorgang zu schaffen, die eine automatische Durchführung der vorgenannten Verfahren ermöglicht. Hierzu müssen die jeweiligen Parameter wie Temperaturen, Haltezeiten und die Pressmuffel betreffende Größen und vorzugsweise auch die Parameter der entsprechenden Heizraten und Abkühlraten in die Steuervorrichtung eingegeben werden können. Vorzugsweise können in diese Steuervorrichtung auch die Menge der Dentalkeramik und der sogenannte Einbettmassen-Faktor eingegeben werden, so dass die Steuervorrichtung automatisch ein optimales Temperaturprofil ermitteln kann, gemäß dem der Aufheizvorgang der Pressmuffel durchgeführt wird. Gegenstand der Erfindung ist außerdem ein Keramik- oder Pressofen, der eine vorstehend genannte Steuervorrichtung enthält und mit dem bzw. in dem der Pressvorgang ausgeführt werden kann.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht maßstabsgetreuen Zeichnung. Es zeigen:

Fig. 1 eine schematische Darstellung des Temperaturverlaufs bei einer Ausführungsform des erfindungsgemäßen Verfahrens,

Fig. 2 eine schematische Darstellung des Temperaturverlaufs bei dem Verfahren, wie es bisher gängig war, und

Fig. 3 stark vereinfacht den Temperaturverlauf im Querschnitt einer Muffel, die mittels des erfindungsgemäßen Verfahrens aufgeheizt wird (Der Temperaturverlauf folgt realistisch keiner linearen, sondern einer logarithmischen Funktion, da sich der Durchgangsquerschnitt ständig ändert und somit der Wärmestrom über den Radius integriert werden muss.)

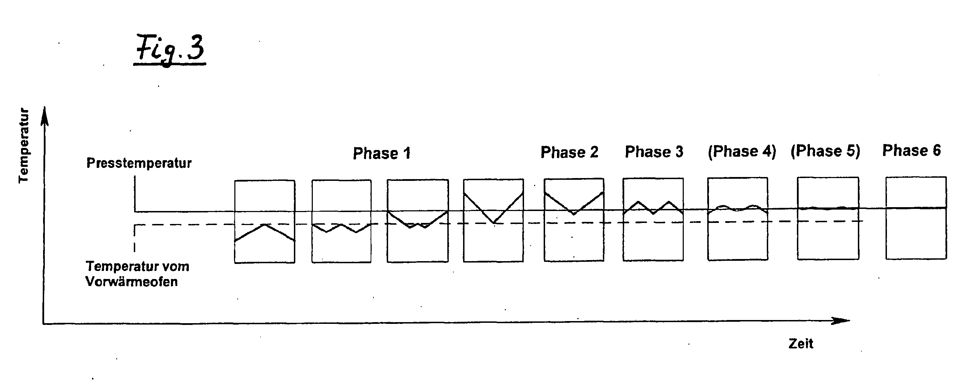

Unter Bezug auf Fig. 1 soll nun als Beispiel ein typischer Temperaturverlauf während der Durchführung des erfindungsgemäßen Verfahrens qualitativ erläutert werden, wobei die entsprechenden Temperaturverläufe im Querschnitt der Muffel in den einzelnen Phasen in Fig. 3 dargestellt sind.

Im Inneren der Pressmuffel herrscht zu Beginn von Phase 1 die Vorwärmtemperatur von etwa 850 °C aus dem Vorwärmofen, wobei durch das Umsetzen in den Pressofen die Randzonen der Pressmuffel auf etwa 700 °C abgekühlt sind. Die Pressmuffel wird dann über die Presstemperatur $T_{press}$ von 940 °C hinaus von außen erwärmt, solange die Heizrate $V_h$ von vorzugsweise 60 °C/min bis zur Maximaltemperatur $T_{max}$ von 1040 °C zum Einsatz kommt.

In der Phase 2 wird die Maximaltemperatur $T_{max}$ dann während einer ersten Haltezeit $t_1$ gehalten. Diese Haltezeit $t_1$ ist insbesondere bei Muffelgrößen ab 200 g erforderlich, da die Aufheizdauer allein nicht genügt, um die erforderliche Wärmemenge zu liefern, damit die gewünschte Temperatur bis in das Innere der Muffel gelangt. Eine genaue Abgrenzung der Phase 2 zu Phase 1 kann bei Fig. 3 nur schlecht angegeben werden, da die Wärme zur Mitte der Pressmuffel hin vordringt und im Ergebnis die Temperatur in der Pressmuffel fast auf Presstemperatur gebracht wird. Die Außenbereiche der Pressmuffel sind noch wesentlich heißer, und zwar auf der Maximaltemperatur $T_{max}$.

In Phase 3 findet dann eine Abkühlung der Randzonen der Pressmuffel mit einer Abkühlrate $V_k$ von vorzugsweise 30 °C/min statt, die grundsätzlich bis zu einer Außentemperatur erfolgen sollte, die entweder der Presstemperatur $T_{press}$ entspricht oder knapp darunter liegt und in letzterem Fall als Minimaltemperatur $T_{min}$ bezeichnet sei. Im dargestellten Beispiel beträgt die Minimaltemperatur $T_{min}$ etwa 880 °C. Bis zur Minimaltemperatur $T_{min}$ wird dann abgekühlt, wenn eine besonders exakte Durchwärmung der Außenbereiche der Muffel erreicht werden soll.

Eine zweite Haltezeit $t_2$ von etwa 4 min - die bei entsprechend hoher-Minimaltemperatur $T_{min}$ durchaus auch nur etwa eine halbe Minute betragen kann - in Phase 4 bewirkt einen Temperaturausgleich innerhalb der Muffel. Die Minimaltemperatur $T_{min}$ wird dabei für kurze Zeit gehalten, bis die Voraussetzungen für einen optimalen Temperaturausgleich erreicht sind.

Die weitere Aufheizung der Randbereiche auf Presstemperatur $T_{press}$ von 940 °C in Phase 5 - wieder mit der Heizrate $V_h$ von vorzugsweise 60 °C/min - geht mit einem weiteren Temperaturausgleich innerhalb der Pressmuffel einher.

Nach der relativ kurzen Aufheizdauer von Phase 5 wird in Phase 6 die Presstemperatur noch während einer

dritten Haltezeit $t_3$ von etwa 1 bis 3 min bis zur Auslösung des Pressvorgangs gehalten. Die Presstemperatur wird dann gehalten, bis der Pressvorgang abgeschlossen ist. Der Temperaturverlauf innerhalb der Muffel ist in dieser Phase nahezu homogen und somit ideal für einen optimalen Pressvorgang.

Die vorgenannten Phasen 4 und 5 dienen vor allem der Erzielung einer perfekt gleichmäßigen Durchwärmung. Es können je nach den Gegebenheiten durchaus auch gute Ergebnisse erzielt werden, wenn in Phase 3 nur auf Presstemperatur $T_{press}$ abgekühlt und eine Haltezeit von beispielsweise 3 min abgewartet wird, bevor der Pressvorgang ausgelöst wird.

Nachstehend wird erläutert, wie im Rahmen der vorliegenden Erfindung die Maximaltemperatur des Ofens, die Größe der zu durchwärmenden Muffel und die Grenztemperaturen eingebetteter Objekte im Randbereich der Muffeln wie beispielsweise Gerüste und Opakerbeschichtung die jeweiligen Temperatur- und Zeitparameter beeinflussen.

Die schnellste Möglichkeit für die Wärmezufuhr ist grundsätzlich eine Aufheizung auf ein möglichst hohes $T_{max}$ und anschließende Abkühlung ohne Haltezeit dazwischen, d.h. $t_1 = 0$. Wäre die Maximaltemperatur $T_{max}$ nicht begrenzt, kann diese abhängig von der Muffelgröße wie folgt dargestellt werden:

$$T_{max} = T_{press} + T_{m1},$$

wobei die Presstemperatur $T_{press}$ zwischen 860 °C und 980 °C liegt.

$T_{m1}$ ist dabei eine konstante Temperaturdifferenz, die für die drei verschiedenen Muffelgrößen von 100 g, 200 g und 300 g wie folgt ermittelt wurde:

$$T_{m1}(100\ g) = 160°C$$
$$T_{m1}(200\ g) = 180°C$$
$$T_{m1}(300\ g) = 200°C.$$

Beispiel: Eine Keramik für 900 °C Presstemperatur soll in einer Muffel von 200 g verpresst werden. Dann ergibt sich:

$$T_{max} = 900\ °C + 180\ °C = 1080\ °C$$

Ist die Maximaltemperatur $T_{max}$ durch die Leistung des Pressofens begrenzt, sollte insbesondere bei höheren Presstemperaturen und großen Muffeln die erste Haltezeit $t_1$ eingeführt werden, da die Energie zur Durchwärmung der Muffel sonst nicht ausreicht, wenn von der begrenzten Maximaltemperatur $T_{max}$ sofort in die Abkühlphase übergegangen wird. Die vorgegebene begrenzte Maximaltemperatur wird nachfolgend $T_{limit}$ genannt. Die Maximaltemperatur $T_{max}$ ist dann nur ein theoretischer Wert, und die tatsächliche Ofentemperatur ist $T_{limit}$. Mit linearer Näherung gilt für die erste Haltezeit $t_1$ folgender Zusammenhang:

$$t_1 = (T_{max} - T_{limit})^* k = (T_{press} + T_{m1} - T_{limit})^* k$$

bei gleichem $T_{press}$ wie oben und $T_{max} > T_{limit}$.

k ist ein Faktor, der für die drei verschiedenen Muffelgrößen von 100 g, 200 g und 300 g wie folgt experimentell ermittelt wurde:

$$k_{100g} = 0{,}05\ min/°C$$
$$k_{200g} = 0{,}075\ min/°C$$
$$k_{300g} = 0{,}1\ min/°C.$$

Beispiel: Eine Keramik für 940 °C Presstemperatur soll ein einer Muffel von 300 g verpresst werden, und die einstellbare Maximaltemperatur des Pressofens beträgt 1100 °C. Dann ergibt sich:

$$t_1 = (940\ °C + 200\ °C - 1100\ °C) * 0{,}1\ min/°C = 40\ °C * 0{,}1\ min/°C = 4\ min.$$

Sollte die Maximaltemperatur $T_{max}$ durch eingebettete Objekte begrenzt sein, ist es natürlich die sicherste Variante, diese Grenztemperatur $T_{objekt}$ ohne weitere Überhöhung als $T_{limit}$ anzuwenden und zur Berechnung der Haltezeit $t_1$ in die Formel einzusetzen. Die Gesamtpresszeit verlängert sich damit jedoch, so dass ein zeitlicher Vorteil gegenüber der konventionellen Aufheizmethode nur noch eingeschränkt vorhanden ist. Zweckmäßig ist es dagegen, eine begrenzte Temperaturüberhöhung $T_{m2}$ zugunsten einer optimalen Durchwärmung anzuwenden. Es ergibt sich folgender Zusammenhang:

$$T_{limit} = T_{objekt} + T_{m2}$$

Die Temperatur $T_{object}$ darf in dem Bereich der Muffel nicht überschritten werden, wo sich die eingebetteten Objekte befinden. Entsprechend der Temperaturmessungen in diesen Bereichen ist mindestens folgende Überhöhung $T_{m2}$ möglich:

$T_{m2}(100\ g) = 0°C$
$T_{m2}(200\ g) = 50°C$
$T_{m2}(300\ g) = 50°C$

Bei der Muffel mit 100 g verlaufen die äußeren und mittleren Temperaturen nahezu mit der Ofentemperatur, nur im Zentrum (Vollkeramik) ist die Temperaturüberhöhung anwendbar. Bei den Muffeln von 200 g und 300 g muss nicht unterschieden werden, da die unterschiedliche Durchwärmung bereits mit dem Faktor k berücksichtigt wird. Weiterhin treten in geringem Abstand vom äußeren Rand der Muffel, wo sich eingebettete Objekte befinden können, nur geringfügige Temperaturunterschiede relativ zum Muffeldurchmesser auf.

Beispiel: Ein Metallgerüst soll mit Keramik für 920 °C in einer Muffel von 200 g überpresst werden. Die Opakerschicht auf dem Metallgerüst ist nur bis 950 °C stabil.

| | |
|---|---|
| $T_{press}$ | = 920 °C |
| $T_{objekt}$ | = 950 °C |
| $T_{m1}(200\ g)$ | = 180 °C |
| $T_{m2}(200\ g)$ | = 50 °C |
| $T_{press}$ | = 920 °C |
| $k_{200g}$ | = 0,075 min/°C |

$$t_1 = \{(t_{press} + T_{m1}) - (T_{objekt} + T_{m2})\}*k = (1100°C - 1000°C)*k = 100*k$$

$t_1 = 7,5$ min, $T_{limit} = 1000°C$

Beim Press-to-Metat-Verfahren wird dabei die Verarbeitungstemperatur des Opakers nicht überschritten, obwohl sich das eingebettete Gerüst auch in Randbereichen der Muffel befinden kann. Der Abstand zur Presstemperatur reicht jedoch aus, um eine gleichmäßige Durchwärmung einer großen Muffel zu realisieren.

Die genaue Ausgestaltung der erfindungsgemäßen Steuervorrichtung zur automatischen Durchführung der vorgenannten Verfahren sowie des damit ausgestatteten erfindungsgemäßen Ofens bedarf keiner ausführlichen Erläuterung, da deren Realisierung dem Fachmann bei Kenntnis des erfindungsgemäßen Verfahrens keine Probleme bereiten dürfte.

Zusammenfassend ist festzuhalten, dass die vorliegende Erfindung eine gleichmäßige Durchwärmung von Muffeln aller Größen ermöglicht. Dadurch sind eine Zeiteinsparung bei perfekter Verarbeitungsqualität sowie das Verpressen von komplexen, mehrgliedrigen Brücken und neue Techniken möglich, z.B. Zirkon-, Metall-, Aluminagerüste bis zu 14 Gliedern, die mit Keramik überpresst werden, was eine Indikationserweiterung bedeutet. Ferner ergibt sich eine deutliche Verringerung von Fehlpressungen und eine optimale, materialschonende Verarbeitung der Keramik in allen Bereichen der Muffel. Durch einen ausreichenden Energietransport zum Aufschmelzen größerer Keramikmengen und durch homogene Temperaturverteilung in der Muffel wird ein perfektes Ausfließen ermöglicht. Vereinzelt ist auch die Absenkung von üblichen Presstemperaturen möglich. Es ist kein Vergrauen der Keramik zu befürchten, was insbesondere bei hellen Zahnfarben wichtig ist, um den ästhetischen Ansprüchen der Patienten zu genügen.

Es ist festzuhalten, dass die unter Bezug auf einzelne Ausführungsformen beschriebenen Merkmale der Erfindung, wie bestimmte Temperaturwerte bzw. -bereiche oder Vorhandensein bestimmter Phasen, auch bei anderen

EP 2 046 239 B1

Ausführungsformen vorliegen können.

**Patentansprüche**

1. Verfahren zum Aufheizen einer für Dentalkeramik verwendeten, vorgewärmten Pressmuffel in einem Pressofen, umfassend folgende Schritte:

   a) Hochheizen der Pressmuffel auf eine Maximaltemperatur ($T_{max}$), die oberhalb der Presstemperatur ($T_{press}$) liegt, bei der ein Pressvorgang ausgeführt wird,
   b) gegebenenfalls Halten der Pressmuffel auf der Maximaltemperatur ($T_{max}$) während einer ersten Haltezeit ($t_1$),
   c) Abkühlen der Pressmuffel auf eine Minimaltemperatur ($T_{min}$), die höchstens so hoch wie die Presstemperatur ($T_{press}$) ist, und
   d) Halten der Pressmuffel auf der Minimaltemperatur ($T_{min}$) während einer zweiten Haltezeit ($t_2$).

2. Verfahren nach Anspruch 1, **dadurch gekennzeichnet, dass**
   die Maximaltemperatur ($T_{max}$) bestimmt ist durch die Presstemperatur ($T_{press}$) zuzüglich einer von der Masse der Pressmuffel abhängigen Temperaturdifferenz $T_{m1}$, wobei für verschiedene Massen von Pressmuffeln für $T_{m1}$ näherungsweise gilt:

   $T_{m1}(100\ g) = 160\ °C$
   $T_{m1}(200\ g) = 180\ °C$
   $T_{m1}(300\ g) = 200\ °C$
   und diese Werte für abweichende Massen von Pressmuffeln interpoliert bzw. extrapoliert werden können.

3. Verfahren nach Anspruch 1 oder 2, **dadurch gekennzeichnet, dass**
   bei Begrenzung der Maximaltemperatur ($T_{max}$) auf eine durch den Ofen bedingte Ofengrenztemperatur $T_{limit}$ die erste Haltezeit ($t_1$) **dadurch** festgelegt ist, dass die Differenz zwischen der Maximaltemperatur ($Tm_{ax}$) und der Ofengrenztemperatur $T_{limit}$ mit einem von der Masse der verwendeten Pressmuffel abhängigen Faktor k multipliziert wird, für den näherungsweise gilt:

   $k_{100g} = 0,05\ min/°C$
   $k_{200g} = 0,075\ min/°C$
   $k_{300g} = 0,1\ min/°C$
   und diese Werte für abweichende Massen von Pressmuffeln interpoliert bzw. extrapoliert werden können.

4. Verfahren nach Anspruch 3, **dadurch gekennzeichnet, dass**
   bei Begrenzung der Maximaltemperatur ($T_{max}$) aufgrund einer Objektgrenztemperatur $T_{objekt}$, die durch in der Pressmuffel eingebettete Objekte bedingt ist, die Ofengrenztemperatur $T_{limit}$ bestimmt ist durch die Objektgrenztemperatur $T_{objekt}$ zuzüglich einer von der Masse der Pressmuffel abhängigen Temperaturdifferenz $T_{m2}$, wobei für verschiedene Massen von Pressmuffeln für $T_{m2}$ näherungsweise gilt:

   $T_{m2}(100\ g) = 0\ °C$
   $T_{m2}(200\ g) = 50\ °C$
   $T_{m2}(300\ g) = 50\ °C$
   und diese Werte für abweichende Massen von Pressmuffeln interpoliert werden können.

5. Verfahren nach einem der vorhergehenden Ansprüche, **dadurch gekennzeichnet, dass** die Minimaltemperatur ($T_{min}$) kleiner als die Presstemperatur ($T_{press}$) ist und im Anschluss an Schritt d) folgende Schritte ausgeführt werden:

   e) Hochheizen der Pressmuffel auf die Presstemperatur ($T_{press}$) und
   f) Halten der Pressmuffel auf der Presstemperatur ($T_{press}$) während einer dritten Haltezeit ($t_3$) vor dem Pressvorgang.

6. Verfahren nach Anspruch 5, **dadurch gekennzeichnet, dass**
   die Differenz zwischen der Presstemperatur ($T_{press}$) und der Minimaltemperatur ($T_{min}$) etwa 20 bis 50 °C beträgt.

7. Verfahren nach Anspruch 5 oder 6, **dadurch gekennzeichnet, dass**

7

die zweite Haltezeit ($t_2$) etwa 0,5 bis 4 Minuten, vorzugsweise etwa 1 bis 3 Minuten, beträgt.

8. Verfahren nach einem der Ansprüche 5 bis 7, **dadurch gekennzeichnet, dass** die dritte Haltezeit ($t_3$) etwa 1 bis 3 Minuten, vorzugsweise etwa 1 bis 2 Minuten, beträgt.

9. Steuervorrichtung für einen Ofen zum Aufheizen einer für Dentalkeramik verwendeten Pressmuffel vor dem Pressvorgang,
wobei sie eine Vorrichtung für die Eingabe der jeweiligen Temperatur-, Haltezeiten- und Pressmuffelsowie der Heizraten-Parameter aufweist **dadurch gekennzeichnet, dass** zur Durchführung eines Verfahrens gemäß einem der Ansprüche 1 bis 8
eine Vorrichtung zur automatischen Durchführung des entsprechenden Verfahrens vorgesehen ist.

10. Steuervorrichtung nach Anspruch 9, **dadurch gekennzeichnet, dass**
sie eine Vorrichtung für die Eingabe der Menge der Dentalkeramik und des EinbettmassenFaktors aufweiset und eine Vorrichtung zur automatischen Ermittlung eines optimalen Temperaturprofils zur Durchführung des entsprechenden Verfahrens umfasst.

11. Ofen zum Aufheizen einer für Dentalkeramik verwendeten Pressmuffel vor dem Pressvorgang und zum Durchführen des Pressvorgangs, **dadurch gekennzeichnet, dass** er eine Steuervorrichtung gemäß einem der Ansprüche 9 oder 10 aufweist.

## Claims

1. Method for heating of a pre-warmed press muffle used for dental ceramics in a press furnace, comprising the subsequent steps:

   a) heating the press muffle to a maximum temperature (Tmax), which is above the press temperature (Tpress), at which a pressing operation is performed,
   b) if necessary, holding the press muffle on the maximum temperature (Tmax) during a first holding time (t1),
   c) cooling of the press muffle to a minimum temperature (Tmin), which is at most as high as the press temperature (Tpress), and
   d) holding of the press muffle on the minimum temperature (Tmin) during a second holding time (t2).

2. Method according to claim 1, **characterised in that** the maximum temperature (Tmax) is defined by the press temperature (Tpress) plus a temperature difference Tm1 dependent on the mass of the press muffle, wherein Tm1 for various masses of press muffles is approximately:

   Tm1 (100 g) = 160 °C
   Tm1 (200 g) = 180°C
   Tm 1 (300 g) = 200 °C
   and these values may be interpolated and/or extrapolated for different masses of press muffles.

3. Method according to claim 1 or 2, **characterised in that** with limitation of the maximum temperature (Tmax) to furnace limit temperature $T_{limit}$ conditioned by the furnace, the first holding time (t1) is defined by multiplication of the difference between the maximum temperature (Tmax) and the furnace limit temperature $T_{limit}$ with a factor k dependent on the mass of the used press muffle, being approximately:

   $k_{100g}$ = 0.05 min/°C
   $k_{200g}$ = 0.075 min/°C
   $k_{300g}$ = 0.1 min/°C
   and these values may be interpolated and/or extrapolated for different masses of press muffles.

4. Method according to claim 3, **characterised in that** with limitation of the maximum temperature (Tmax) due to an object limit temperature $T_{objekt}$, which is conditioned by objects embedded into the press muffle, the furnace limit temperature $T_{limit}$ is defined by the object limit temperature $T_{objekt}$ plus a temperature difference Tm2 dependent on the mass of the press muffle, wherein Tm2 for various masses of press muffles is approximately:

Tm2 (100 g) = 0°C
Tm2 (200 g) = 50 °C
Tm2 (300 g) = 50 °C
and these values may be interpolated for different masses of press muffles.

5. Method according to one of the preceding claims, **characterised in that** the minimum temperature (Tmin) is lower than the press temperature (Tpress) and step d) is followed by subsequent steps:

   e) heating-up the press muffle to the press temperature (Tpress) and
   f) holding the press muffle on the press temperature (Tpress) during a third holding time (T3) before the pressing operation.

6. Method according to claim 5, **characterised in that** the difference between the press temperature (Tpress) and the minimum temperature (Tmin) amounts to about 20 to 50 °C.

7. Method according to claim 5 or 6, **characterised in that** the second holding time (t2) amounts to about 0.5 to 4 minutes, preferably about 1 to 3 minutes.

8. Method according to one of claims 5 to 7, **characterised in that** the third holding time (t3) amounts to about 1 to 3 minutes, preferably about 1 to 2 minutes.

9. Control device for a furnace for heating of a press muffle used for dental ceramics before the pressing operation, including an apparatus for the input of the respective temperature, holding times, press muffle parameters and heating rate parameters **characterised in that** an apparatus for automatic performing of the method in accordance with one of the claims 1 to 8 is provided.

10. Control device according to claim 9, **characterised by** an apparatus for the input of the amount of dental ceramics and the embedding mass factor and an apparatus for the automatic determination of an optimum temperature profile for performing of the corresponding method.

11. Furnace for heating of a press muffle used for dental ceramics before the pressing operation and for performing the pressing operation, **characterised by** a control device in accordance with claim 9 or 10.

**Revendications**

1. Procédé pour chauffer un moufle de pressage préchauffé utilisé pour de la céramique dentaire dans un four de pressage, comprenant les étapes suivantes :

   a) chauffage des moufles de pressage à une température maximale ($T_{max}$) qui se situe au-dessus de la température de pressage ($T_{press}$) à laquelle un pressage est effectué,
   b) le cas échéant, maintien des moufles de pressage à la température maximale ($T_{max}$) pendant une première durée de maintien ($t_1$),
   c) refroidissement des moufles de pressage à une température minimale ($T_{min}$) qui est au plus égale à la température de pressage ($T_{press}$) et
   d) maintien des moufles de pressage à la température minimale ($T_{min}$) pendant une deuxième durée de maintien ($t_2$).

2. Procédé selon la revendication 1, **caractérisé en ce que** la température maximale ($T_{max}$) est déterminée par la température de pressage ($T_{press}$) augmentée d'une différence de température $T_{ml}$ dépendante de la masse des moufles de pressage, les valeurs suivantes s'appliquant approximativement pour $T_{ml}$ pour différentes masses de moufles de pressage :

   $T_{ml}$(100 g) = 160 °C
   $T_{ml}$(200 g) = 180 °C
   $T_{ml}$(300 g) = 200 °C
   et ces valeurs pouvant être interpolées ou extrapolées pour des masses de moufles de pressage qui diffèrent de celles-ci.

**3.** Procédé selon la revendication 1 ou 2, **caractérisé en ce**
**qu'**en cas de limitation de la température maximale ($T_{max}$) à une température limite de four $T_{limit}$ imposée par le four, la première durée de maintien ($t_1$) est définie par le fait que la différence entre la température maximale ($T_{max}$) et la température limite de four $T_{limit}$ est multipliée par un facteur k dépendant de la masse des moufles de pressage utilisés, pour lequel s'applique approximativement :

$k_{100}$ = 0,05 min/°C
$k_{200g}$ = 0,075 min/°C
$k_{300g}$ = 0,1 min/°C
et ces valeurs peuvent être interpolées ou extrapolées pour des masses de moufles de pressage qui diffèrent de celles-ci.

**4.** Procédé selon la revendication 3, **caractérisé en ce**
**qu'**en cas de limitation de la température maximale ($T_{max}$) en raison d'une température limite d'objet $T_{objet}$ qui est imposée par des objets incorporés dans les moufles de pressage, la température limite de four $T_{limit}$ est déterminée par la température limite d'objet $T_{objet}$ augmentée d'une différence de température $T_{m2}$ dépendante de la masse des moufles de pressage, les valeurs suivantes s'appliquant approximativement pour $T_{m2}$ pour différentes masses de moufles de pressage :

$T_{m2}$(100 g) = 0 °C
$T_{m2}$(200 g) = 50 °C
$T_{m2}$(300 g) = 50 °C
et ces valeurs pouvant être interpolées pour des masses de moufles de pressage qui diffèrent de celles-ci.

**5.** Procédé selon une des revendications précédentes, **caractérisé en ce que** la température minimale ($T_{min}$) est inférieure à la température de pressage ($T_{press}$) et que les étapes suivantes sont exécutées à la suite de l'étape d) :

e) chauffage des moufles de pressage à la température de pressage ($T_{press}$) et
f) maintien des moufles de pressage à la température de pressage ($T_{press}$) pendant une troisième durée de maintien ($t_3$) avant le pressage.

**6.** Procédé selon la revendication 5, **caractérisé en ce**
**que** la différence entre la température de pressage ($T_{press}$) et la température minimale ($T_{min}$) est d'environ 20 à 50°C.

**7.** Procédé selon la revendication 5 ou 6, **caractérisé en ce**
**que** la deuxième durée de maintien ($t_2$) est d'environ 0,5 à 4 minutes, de préférence d'environ 1 à 3 minutes.

**8.** Procédé selon une des revendications 5 à 7, **caractérisé en ce**
**que** la troisième durée de maintien ($t_3$) est d'environ 1 à 3 minutes, de préférence d'environ 1 à 2 minutes.

**9.** Dispositif de commande pour un four destiné à chauffer un moufle de pressage utilisé pour de la céramique dentaire avant le pressage,
lequel présente un dispositif pour l'entrée des paramètres respectifs de température, durée de maintien et moufles de pressage ainsi que des paramètres de vitesse de chauffage,
**caractérisé en ce**
**que** pour réaliser un procédé selon une des revendications 1 à 8, il est prévu un dispositif pour la réalisation automatique du procédé correspondant.

**10.** Dispositif de commande selon la revendication 9, **caractérisé en ce qu'**il présente un dispositif pour l'entrée de la quantité de céramique dentaire et du facteur de masse incorporée et
comprend un dispositif pour la détermination automatique d'un profil de température optimal pour réaliser le procédé correspondant.

**11.** Four pour chauffer un moufle de pressage utilisé pour de la céramique dentaire avant le pressage et pour réaliser le pressage, **caractérisé en ce**
**qu'**il présente un dispositif de commande selon une des revendications 9 ou 10.

# Fig. 2

# Fig. 1

11

EP 2 046 239 B1

**Fig.3**

Temperatur

Presstemperatur

Phase 1    Phase 2    Phase 3    (Phase 4)    (Phase 5)    Phase 6

Temperatur vom
Vorwärmeofen

Zeit

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6303059 B1